**Europäisches Patentamt**

**European Patent Office**

**Office européen des brevets**

(19)

(11) Veröffentlichungsnummer: **0 113 861**
**A2**

(12) # EUROPÄISCHE PATENTANMELDUNG

(21) Anmeldenummer: 83112383.1

(22) Anmeldetag: 09.12.83

(51) Int. Cl.³: **C 04 B 31/34,** C 04 B 31/40, **D 06 M 11/04**

(30) Priorität: 22.12.82 DE 3247351

(43) Veröffentlichungstag der Anmeldung: 25.07.84
Patentblatt 84/30

(84) Benannte Vertragsstaaten: **AT BE CH DE FR GB IT LI**

(71) Anmelder: **BAYER AG, Konzernverwaltung RP**
**Patentabteilung, D-5090 Leverkusen 1 Bayerwerk (DE)**

(72) Erfinder: **Brokmeier, Dieter, Dr., Claudiusstrasse 40,**
**D-4047 Dormagen 1 (DE)**

(54) **Formkörper und ihre Herstellung.**

(57) Formkörper mit einer durch Polyacrylnitrilfasern verstärkten Matrix aus organischem oder anorganischem Material, deren Polyacrylnitrilfasern zuvor mit einem Mineralgerbstoff behandelt wurden, weisen hervorragende Eigenschaften, insbesondere Festigkeiten auf.

EP 0 113 861 A2

0113861

BAYER AKTIENGESELLSCHAFT      5090 Leverkusen, Bayerwerk
Zentralbereich
Patente, Marken und Lizenzen   Jo/bo/c

## Formkörper und ihre Herstellung

Die Erfindung betrifft Formkörper mit einer durch Polyacrylnitrilfasern verstärkten Matrix aus anorganischem
oder organischem Material und ein Verfahren zu ihrer Herstellung.

Aus der Deutschen Offenlegungsschrift 30 12 998 ist bereits bekannt, Polyacrylnitrilfasern, die an ihrer Oberfläche mit einer kristallinen Schicht versehen sind, die
von dem unlöslichen Reaktionsprodukt eines basischen Minerals mit einer Alkylsulfamidocarbonsäure gebildet wird,
zur Verstärkung von Formkörpern mit einer Matrix aus anorganischem oder organischem Material einzusetzen. Obgleich beispielsweise mit Portland-Zement Formkörper hoher Festigkeit erzielt werden, ist an diesem Verfahren
nachteilig, daß die Formkörperherstellung aufwendig ist
und unmittelbar anschließend an die primäre Faserbehandlung erfolgen muß, wenn sich der erwünschte Erfolg einstellen soll.

Nicht ausgerüstete Polyacrylnitrilfasern sind hingegen
praktisch wirkungslos, da keine ausreichende Haftung
zum anorganischen oder organischen Material eintritt.

Le A 22 141

Es wurde nun gefunden, daß man Formkörper der genannten Art einfacher und mit guten Eigenschaften herstellen kann, wenn man als Polyacrylnitrilfasern solche einsetzt, die zuvor mit Mineralgerbstoffen behandelt wurden.

Mit Mineralgerbstoffen behandelte Synthesefasern, insbesondere Polyamid- und Polyesterfasern sind bereits aus der Deutschen Patentschrift 24 31 847 bekannt, werden dort jedoch ausschließlich zur elektrostatischen Beflokkung verwendet, wobei die Mineralgerbstoffausrüstung dazu dient, den Fasern die erforderliche elektrische Leitfähigkeit und Rieselfähigkeit zu verleihen.

Eine Anregung, mit Mineralgerbstoffen behandelte Polyacrylnitrilfasern zur Herstellung faserverstärkter Formkörper, insbesondere aus anorganischem Material einzusetzen, kann dieser Literaturstelle nicht entnommen werden.

Als Polyacrylnitrilfasern eignen sich solche aus Acrylnitrilhomo- und -copolymerisaten, insbesondere aber solche mit einem Acrylnitrilgehalt von mehr als 98 Gew.-%. Bevorzugt sind Acrylnitrilhomopolymerisate. Die Fasern haben vorzugsweise folgende Eigenschaften: einen Titer von 0,5 bis 10 dtex, eine Festigkeit von 20 bis 80 cN/tex und einen Modul von 500 bis 1500 dN/mm² bei einer Dehnung von 2 %.

Insbesondere haben die Fasern folgende Eigenschaften: einen Titer von 0,6 bis 6,7 dtex, eine Festigkeit von 50 bis 70 cN/tex und einen Modul von 700 bis 1200 dN/mm² bei 2 % Dehnung.

Le A 22 141

Als Mineralgerbstoffe eignen sich wasserlösliche, vorzugsweise basische oder hydrolysierfähige Salze des Chroms, Eisens, Aluminiums und Zirkons, wie sie in Winnacker-Küchler, Chemische Technologie, Band IV, 1960, S. 657 ff beschrieben sind. Salze des Zirkons wie Zirkonylsulfat sind bevorzugt.

Die Behandlung der Fasern erfolgt zweckmäßigerweise mit einer Flotte, in der die Mineralgerbstoffe in einer Menge von 1 bis 5 g/l gelöst sind, wobei das Flottenverhältnis (Gewichtsteile Fasern bezogen auf Gewichtsteile wäßrige Mineralgerbstofflösung) 1:10 bis 1:40 beträgt. Selbstverständlich ist zu berücksichtigen, daß feinere Fasern bezogen auf das Gewicht eine größere Oberfläche aufweisen als gröbere Fasern und daher, bezogen auf das Gewicht, mehr Mineralgerbstoff aufnehmen sollten.

Durch den Mineralgerbstoff weist die Flotte einen niedrigen pH-Wert auf, bei Zirkonylsulfat etwa 1,5.

Fasern mit besonders guter Haftung werden erhalten, wenn man während der Behandlung mit dem Mineralgerbstoff den pH erhöht, vorzugsweise um 1 bis 2 Einheiten, d.h. im Falle des Zirkonylsulfates auf etwa 2,5. Die Behandlung der Fasern erfolgt bei etwas erhöhter Temperatur, vorzugsweise bei 40 bis 60°C. Die Faserbehandlung benötigt etwa 5 bis 60 Minuten, vorzugsweise 10 bis 40 Minuten. Danach werden die Fasern aus der Flotte genommen, auf einen Restfeuchtegehalt von 20 bis 40 Gew.-%, bezogen auf trockene Faser, gebracht, beispielsweise durch Zentrifugieren und in dieser Form, auch nach längerer Lagerung,

0113861

zur Herstellung der erfindungsgemäßen Formkörper eingesetzt. Unter dem Mikroskop ist zu erkennen, daß sich auf
der Faseroberfläche ein kristalliner Niederschlag gebildet hat.

Geeignete organische oder anorganische Materialien sind
zum Beispiel Polyamide, Polyester, Polycarbonate, Gips
und Zement, wobei insbesondere bei der Verstärkung von
Zement hervorragende Ergebnisse erzielt werden.

Die Herstellung der Formkörper erfolgt zweckmäßigerweise
durch Einbringen der Fasern in eine Schmelze, Lösung
oder Suspension des organischen oder anorganischen Materials und Aushärten.

Le A 22 141

Beispiel

50 g Fasern mit einem Titer von 1,4 dtex, einer Festigkeit von 50 cN/dtex, einer Bruchdehnung von 10,2 % und einem Anfangsmodul von 961 dN/mm² bei 2 % Dehnung aus einem Polyacrylnitrilhomopolymerisat werden in einer wäßrigen Flotte von 5 g/l $ZrOSO_4.4\ H_2O$, in der sich ein pH-Wert von 1,5 einstellt, im Flottenverhältnis 1:20 10 Minuten bei 50°C bewegt, wobei sich die Lösung eintrübt.

Der pH-Wert wird durch Zugabe von $Na_2HPO_4$ auf 2,5 erhöht, wobei die Trübung der Flotte zunimmt. Die Fasern werden in der Flotte weitere 10 Minuten bewegt, aus der Flotte entnommen und auf eine Restfeuchte von 30 % zentrifugiert.

Die Fasern werden mit einer wäßrigen Zementbrühe verrührt (2 Gew.-% Fasern bezogen auf den Feststoff der Zementbrühe). Die Zementbrühe wird in eine Form gegossen und vier Wochen aushärten lassen. Man erhält Formkörper mit ausgezeichneten Eigenschaften.

Le A 22 141

0113861

Patentansprüche

1. Formkörper mit einer durch Polyacrylnitrilfasern verstärkten Matrix aus organischem oder anorganischem Material, dadurch gekennzeichnet, daß man Polyacrylnitrilfasern einsetzt, die zuvor mit einem Mineralgerbstoff behandelt wurden.

2. Verfahren zur Herstellung von Formkörpern nach Anspruch 1, dadurch gekennzeichnet, daß man die Fasern in eine Schmelze, Lösung oder Suspension des organischen oder anorganischen Materials einbringt und die Mischung aushärtet.

Le A 22 141